# EUROPÄISCHE PATENTSCHRIFT

(11) **EP 3 966 480 B1**
(45) Veröffentlichungstag und Bekanntmachung des Hinweises auf die Patenterteilung: **15.05.2024**
(21) Anmeldenummer: 20715323.0
(22) Anmeldetag: 26.03.2020
(51) Int. Cl.: F16K 11/078, F16K 47/02, F16K 47/04

(54) **EINHEBEL-KARTUSCHE FÜR EINE SANITÄRARMATUR**
SINGLE-LEVER CARTRIDGE FOR A SANITARY FITTING
CARTOUCHE À LEVIER UNIQUE POUR UNE ROBINETTERIE SANITAIRE

(30) Priorität: 10.05.2019 DE 102019003301
(43) Veröffentlichungstag der Anmeldung: 16.03.2022
(73) Patentinhaber: Grohe AG, 58765 Hemer (DE)
(72) Erfinder: TUESHAUS, Jan Philipp, 58675 Hemer (DE); STEINHOFF, Stefan, 59846 Sundern (DE); WEISS, Martin, 58239 Schwerte (DE); LEUTNER, Markus, 58802 Balve (DE)
(86) Internationale Anmeldenummer: PCT/EP2020/058536
(87) Internationale Veröffentlichungsnummer: WO 2020/229039

(56) Entgegenhaltungen:
- EP-A1- 0 129 715
- EP-A1- 3 181 963
- DE-A1- 3 709 228

## Beschreibung

Die Erfindung betrifft eine Einhebel-Kartusche für eine Sanitärarmatur zur Temperatur- und/oder Mengeneinstellung von Mischwasser nach dem Oberbegriff des Patentanspruches 1.

Der Einsatz von Einhebel-Kartuschen ist im Sanitärbereich weit verbreitet. Bei einer Kippbewegung des Schwenkhebels einer solchen Einhebel-Kartusche erfolgt eine Mischwasser-Mengeneinstellung. Bei einer Drehbetätigung des Schwenkhebels erfolgt eine Mischwasser-Temperatureinstellung.

Aus EP 311 573 B1, EP 3 181 963 A1, DE 37 09 228 A1 und EP 0 129 715 A1 ist jeweils eine gattungsgemäße Einhebel-Kartusche mit einer Steuerscheiben-Anordnung bekannt. Diese weist eine ortsfest in der Kartusche angeordnete statische Steuerscheibe auf, in der ein Kalt- und ein Warmwassereinlass sowie ein Mischwasserauslass ausgebildet sind. Zudem weist die Steuerscheiben-Anordnung eine mittels des Schwenkhebels verschiebbare dynamische Steuerscheibe auf, in der eine Ausnehmung ausgebildet ist, die in unterschiedliche Überlappung mit den Kalt- und Warmwassereinlässen sowie dem Mischwasserauslass bringbar ist, um die Temperatur und/oder die Menge des aus dem Mischwasserauslass der statischen Steuerscheibe geführten Mischwassers einzustellen. Die beiden Steuerscheiben sind an einer Dichtungsebene mit einander zugewandten Dichtflächen in Gleitkontakt. In der Dichtfläche der statischen Steuerscheibe sind die Mündungen der Kalt- und Warmwassereinlässe ausgebildet, die von der Dichtfläche der dynamischen Steuerscheibe überdeckbar sind.

Bei der Anwendung einer Kartusche, die für einen hohen Durchfluss (zum Beispiel für eine Wannenanwendung) entwickelt worden ist, in einer Armatur mit geringem Durchfluss (zum Beispiel bei einer Waschtischarmatur mit PCA-Strahlregler) besteht die Problematik, dass der maximale Durchfluss schon bei einem geringen Öffnungswinkel der Kartusche erreicht wird. Dadurch gestaltet sich eine Einstellung der Temperatur und/oder der Menge des Mischwassers unkomfortabel. Um die Einstellung der Temperatur und/oder der Menge des Mischwassers komfortabler zu gestalten, ist bekannt, im Strömungsweg stromab der Kartusche den Mischwasser-Durchfluss mit einem Durchflussbegrenzer stark zu drosseln. In diesem Fall bleibt jedoch die Steuerscheiben-Anordnung mit einem hohen Wasserdruck beaufschlagt. Dies führt dazu, dass es schon durch kleine Druckunterschiede zwischen Heiß- und Kaltwasser zu einem Querfluss kommen kann. Zudem besteht das Risiko, dass es zu einer starken Veränderung der Mischwassertemperatur kommen kann, sofern sich der Wasserdruck bei laufender Armatur ändert.

Die Aufgabe der Erfindung besteht darin, eine Einhebel-Kartusche bereitzustellen, die in einfacher Weise sowohl bei Sanitärarmaturen mit geringem Durchfluss (zum Beispiel Waschtischarmaturen) als auch bei Sanitärarmaturen mit hohem Durchfluss (zum Beispiel Wannenarmaturen) anwendbar ist, wobei in beiden Fällen eine im Vergleich zum Stand der Technik komfortable Einstellung der Temperatur und/oder Menge des Mischwassers ermöglicht ist.

Die Aufgabe ist durch die Merkmale des Patentanspruches 1 gelöst. Bevorzugte Weiterbildungen der Erfindung sind in den Unteransprüchen offenbart.

Erfindungsgemäß weist die Kartusche ein als separates Bauteil ausgebildetes Drosselelement auf, mit dem ein Strömungsquerschnitt der Mündungen der Kalt- und Warmwassereinlässe reduzierbar ist. Auf diese Weise erfolgt eine Drosselung der Warm- und/oder Kaltwasserströmung, die in Richtung auf die Ausnehmung der dynamischen Steuerscheibe geführt ist.

Erfindungsgemäß erfolgt somit die Durchflussbegrenzung nicht mehr im Strömungsweg stromab der Kartusche mit Hilfe eines separaten Durchflussbegrenzers. Vielmehr ist erfindungsgemäß die Durchflussbegrenzung unmittelbar an der Einlassseite der Kartusche integriert. Die Steuerscheiben-Anordnung in der Kartusche wird daher im Vergleich zum Stand der Technik mit einem geringerem Wasserdruck (ab dynamischer Scheibe) beaufschlagt, wodurch das Querflussrisiko reduziert ist und daher auch die Einstellbarkeit der Temperatur und/oder Menge des Mischwassers verbessert ist.

Im Unterschied zur Erfindung ist in der oben genannten EP 311 573 B1 ein Siebelement in die Ausnehmung der dynamischen Steuerscheibe eingesetzt. Das Siebelement ist jedoch bezüglich Einbaulage und Funktion nicht mit dem erfindungsgemäßen Drosselelement vergleichbar: So ist das Siebelement mit Abstand zur Dichtungsebene in der Ausnehmung der dynamischen Steuerscheibe eingesetzt. Das Siebelement reduziert daher nicht den Strömungsquerschnitt der Mündungen der Kalt- und Warmwassereinlässe, sondern bewirkt ausschließlich eine Geräuschreduzierung im Strömungsweg durch die Kartusche. Der Einsatz solcher Siebelemente ist zudem auch aus der EP 18438B1 und aus der DE 7913221 U1 bekannt.

In einer technischen Umsetzung kann das Drosselelement einen Drosselboden mit Drosselöffnungen aufweisen. Der Drosselboden kann an seiner, der Dichtfläche der statischen Steuerscheibe zugewandten Bodenseite flächenbündig in der Dichtungsebene liegen, das heißt in Gleitkontakt mit der Dichtfläche der statischen Steuerscheibe sein.

Im Hinblick auf eine einfache Montage bzw. Demontage weist das Drosselelement die folgende Bauteil-Geometrie auf: So ist das Drosselelement insgesamt topfförmig ausgebildet, und zwar mit dem oben erwähnten Drosselboden sowie einer davon hochgezogenen, bevorzugt umfangsseitig geschlossenen Seitenwand. Das Drosselelement kann bevorzugt als ein Kunststoffteil gefertigt sein.

In der Kartusche weist die Steuerscheiben-Anordnung (d.h. Steuerscheiben-Paket) zusätzlich eine ortsfest auf der dynamischen Steuerscheibe montierte Schieberplatte auf.

An der Schieberplatte ist eine Lagerstelle für eine Achsanbindung am Schwenkhebel ausgebildet.

Bei einer solchen konstruktiven Ausgestaltung der Kartusche geht die Seitenwand des

Drosselelementes an ihrem bodenfernen Rand in einen nach außen abgewinkelten Halteflansch über. Der Halteflansch wird montagetechnisch einfach zwischen der dynamischen Steuerscheibe und der Schieberplatte eingeklemmt.

Um bei laufender Armatur ein Abheben des Drosselelementes bei hohem Wasserdruck zu verhindern, wird das Drosselelement mittels eines zusätzlichen federnden Elementes fixiert.

Das federnde Element kann ein zusätzliches Bauteil sein oder in der Schieberplatte oder im Drosselelement integriert sein.

In der Einbaulage kann die bevorzugt umlaufende Seitenwand des topfförmigen Drosselelementes spaltfrei in Anlage mit einer, die Ausnehmung begrenzenden Innenwand der dynamischen Steuerscheibe sein. Die Seitenwand des Drosselelementes kann zudem bevorzugt geschlossenflächig sein, um eine einwandfreie Drosselwirkung mit entsprechendem Druckabfall sowie mit entsprechender Durchflussbegrenzung bereitzustellen.

In einer bevorzugten technischen Realisierung kann der Drosselboden des topfförmigen Drosselelementes aufgeteilt sein in ein erstes Bodensegment sowie ein zweites Bodensegment. In den beiden Bodensegmenten sind jeweils Drosselöffnungen ausgebildet. Das erste Bodensegment liegt mit seiner, der Dichtfläche der statischen Steuerscheibe zugewandten Bodenseite flächenbündig in der Dichtungsebene, um den wirksamen Strömungsquerschnitt der Kalt- und Warmwassereinlässe zu reduzieren. Das heißt, dass das erste Bodensegment in Gleitkontakt mit der Dichtfläche der statischen Steuerscheibe ist. Im Unterschied dazu ist das zweite Bodensegment von der Dichtungsebene um einen freien Abstand (lichte Höhe) beabstandet. Die beiden Bodensegmente gehen an einem, im Profil S-förmigen oder stufenförmigen Übergangsabschnitt ineinander über. Im Hinblick auf eine gesteigerte Drosselwirkung kann der Übergangsabschnitt zwischen den beiden Bodensegmenten geschlossenflächig (das heißt ohne Drosselöffnungen) ausgebildet sein.

Die in der dynamischen Steuerscheibe ausgebildete Ausnehmung bildet zusammen mit dem Mischwasserauslass in der statischen Steuerscheibe eine Mischkammer. In der obigen konstruktiven Auslegung kann das topfförmige Drosselelement diese Mischkammer in die erste Teilkammer, die in der dynamischen Steuerscheibe ausgebildet ist, und in eine zweite Teilkammer aufteilen, die in der statischen Steuerscheibe ausgebildet ist. Bei laufender Armatur ergibt sich daher der folgende Strömungsweg: So wird eine einlassseitige Kalt- und/oder Warmwasserströmung zunächst komplett in die erste Teilkammer geführt und am ersten Bodensegment gedrosselt (d.h. erste Drosselstelle). Die erste Teilkammer wird komplett durchströmt, wobei die Kalt- und/oder Warmwasserströmung an den Drosselöffnungen des zweiten Bodensegmentes (d.h. zweite Drosselstelle) in die zweite Teilkammer, das heißt in den Mischwasserauslass ausströmt. Aufgrund der lichten Höhe des zweiten Bodensegmentes zur Dichtungsebene ergibt sich bei laufender Armatur ein Verformungsraum zwischen dem Drosselboden und der Dichtungsebene. In den Verformungsraum kann das mit hohem Fließdruck beaufschlagte zweite Bodensegment geringfügig in Richtung auf die Dichtungsebene gedrückt bzw. verformt werden, wodurch eine lagegenaue, stabile Positionierung des Drosselelementes gewährleistet ist, und zwar auch bei hohen Wasserdrücken.

In einer weiteren Ausführungsvariante kann in der ersten Teilkammer eine Reinigungseinheit angeordnet sein, die ein Zusetzen der Drosselöffnungen im ersten und im zweiten Bodensegment mit Kalk verhindert. Bevorzugt kann die Reinigungseinheit eine von den Drosselöffnungen beabstandete, lose in der ersten Teilkammer angeordnete Prallplatte aufweisen, von der Reinigungsstifte abragen. Die Reinigungsstifte weisen einen im Vergleich zum Drosselöffnungs-Durchmesser reduzierten Durchmesser auf, so dass diese mit Lochspiel durch die Drosselöffnungen des ersten und des zweiten Bodensegmentes geführt sind. Bei laufender Armatur wird die Prallplatte mitsamt vier Reinigungsstifte aufgrund des Fließdruckes in der ersten Teilkammer bewegt, wodurch ein Zusetzen der Drosselöffnungen mit Kalk, etc. verhindert wird.

Nachfolgend sind Ausführungsbeispiele der Erfindung anhand der beigefügten Figuren beschrieben.

Es zeigen:
- Fig. 1: in einer perspektivischen Teilschnittdarstellung eine nicht erfindungsgemäße Einhebel-Kartusche;
- Fig. 2: das Drosselelement in Alleinstellung;
- Fig. 3a und 3b: unterschiedliche Ansichten der Einhebel-Kartusche in einer Geschlossenposition des Schwenkhebels;
- Fig. 4a und 4b: jeweils Ansichten entsprechend der Fig. 3, wobei sich die Einhebel-Kartusche in einer Offenposition befindet, in der eine Strömungsverbindung zwischen einem der Wassereinlässe sowie dem Mischwasserauslass hergestellt ist;
- Fig. 5: in einer Detailansicht ein zweites nicht erfindungsgemäßes Ausführungsbeispiel der Einhebel-Kartusche; und
- Fig. 6: in einer Ansicht entsprechend der Fig. 5 ein erfindungsgemäßes Ausführungsbeispiel der Einhebel-Kartusche.

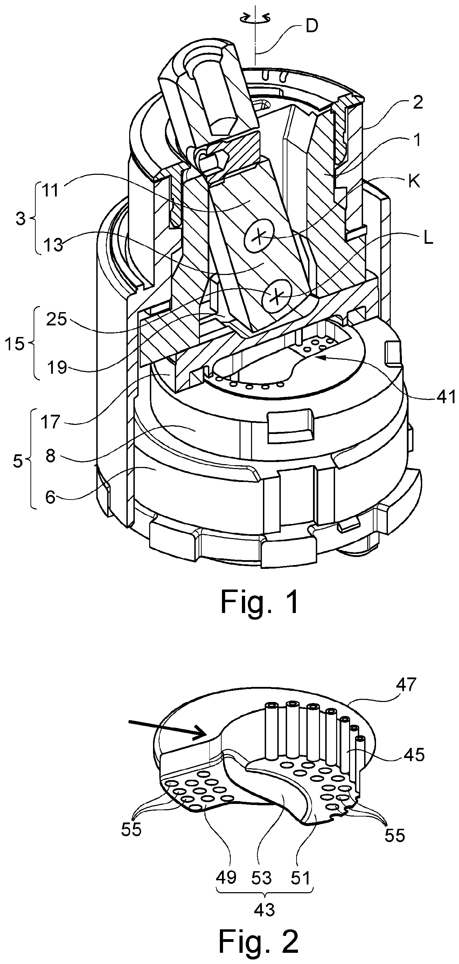

In der Fig. 1 ist eine Einhebel-Kartusche gezeigt, die eine Schwenkhülse 1 mit darin integriertem Schwenkhebel 3 sowie ein Steuerscheibenpaket 5 aufweist. Die Schwenkhülse 1 sowie das Steuerscheibenpaket 5 sind in dem, in der Fig. 1 gezeigten Zusammenbauzustand in einem, im Wesentlichen rotationssymmetrischen Kartuschengehäuse 2 montiert.

Das Kartuschengehäuse 2 ist wiederum in einer Einbaulage in einem Armaturengehäuse einer Sanitärarmatur mit Wasserauslauf eingebaut. Wie aus der Fig. 1 hervorgeht, ist die Schwenkhülse 1 in der Einbaulage im Kartuschengehäuse 2 um eine Drehachse D drehbar um einen durch nicht gezeigte Drehanschläge vorgegebenen Drehwinkel verschwenkbar. Der Schwenkhebel 3 ist innerhalb der Schwenkhülse 1 an einer Kippachse K angelenkt. Die Kippachse K teilt den Schwenkhebel 3 in einen aus der Kartusche ragenden Hebelarm 11, der benutzerseitig betätigbar ist, und in einen Hebelarm 13 auf, der über eine Achsanbindung 15 mit einer Schieberplatte 17 des Steuerscheibenpakets 5 gekoppelt ist. Das Steuerscheibenpaket 5 weist zudem in der Fig. 1 eine ortsfest im Kartuschengehäuse 2 angeordnete statische Steuerscheibe 6 sowie eine darauf liegende verschiebbare, dynamische Steuerscheibe 8 auf. Die dynamische Steuerscheibe 8 bildet zusammen mit der Schieberplatte 17 eine formschlüssige Baueinheit. Auf der Oberseite der Schieberplatte 17 ist in der Fig. 1 eine Lagerstelle 19 angeformt. Die Achsanbindung 15 wird einerseits durch die Lagerstelle 19 sowie andererseits durch einen querverlaufenden Achszapfen 25 gebildet, der die Lagerachse L definiert, die achsparallel zur Kippachse K verläuft.

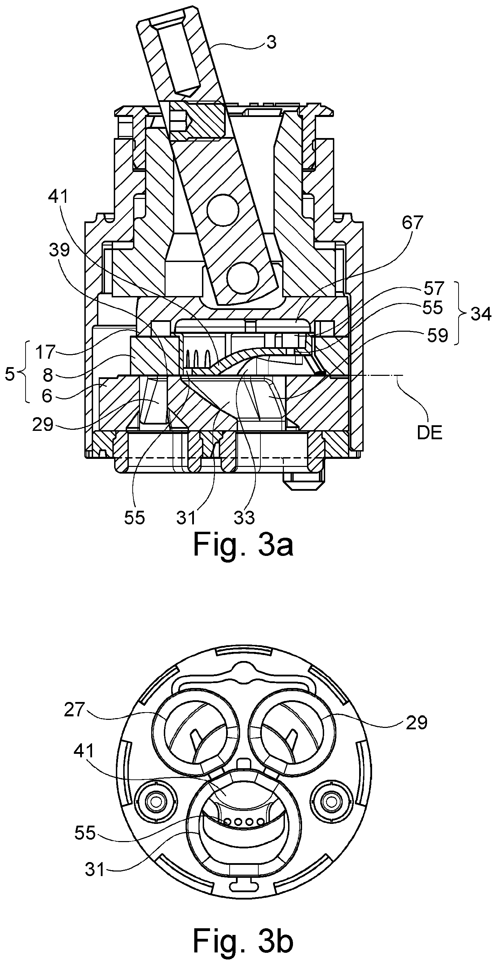

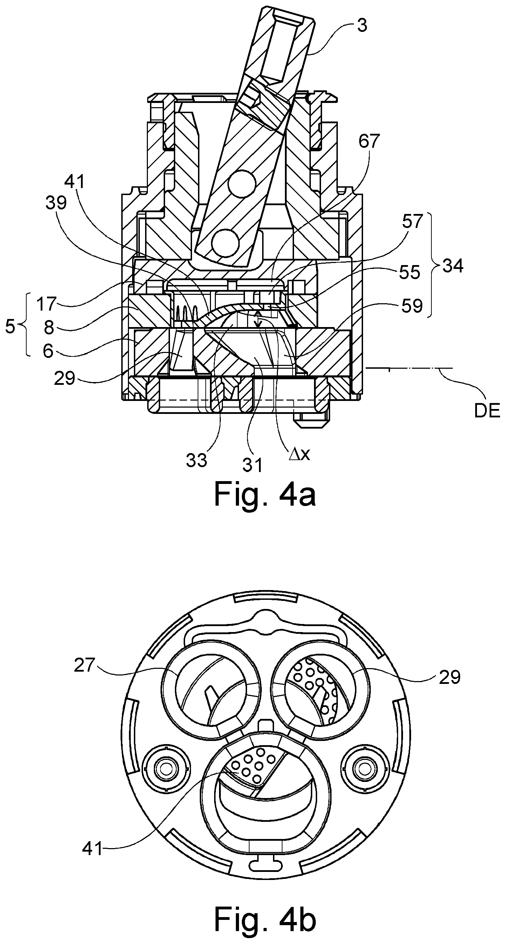

In der ortsfesten Steuerscheibe 6 ist ein Warmwassereinlass 27 sowie ein Kaltwassereinlass 29 (Figur 3b) angeordnet. Zudem ist in der statischen Steuerscheibe 6 ein Mischwasserauslass vorgesehen, der mit dem Wasserauslauf der Sanitärarmatur verbindbar ist. Die Kaltwasser- und Warmwassereinlässe 29, 27 der statischen Steuerscheibe 6 sind je nach Dreh- oder Schwenkstellung des Schwenkhebels 3 in unterschiedliche Überlappung mit einer Ausnehmung 33 bringbar, die in der dynamischen Steuerscheibe 8 ausgebildet ist, wodurch eine Temperatur- und/oder Mengeneinstellung des Mischwassers erfolgen kann. Die Ausnehmung 33 der dynamischen Steuerscheibe 8 bildet zusammen mit dem Mischwasserauslass 31 in der statischen Steuerscheibe 6 eine Mischkammer 34 (Figur 3a oder 4a).

Die Temperatureinstellung des Mischwassers erfolgt mit der in den Figuren gezeigten Einhebel-Kartusche über eine Drehbetätigung des Schwenkhebels 3 um die Drehachse D. Bei einer solchen Drehbetätigung um die Drehachse D bildet der Schwenkhebel 3 zusammen mit der Schwenkhülse 1 und der Schieberplatte 17 mitsamt der dynamischen Steuerscheibe 8 eine drehgekoppelte Baueinheit. Demgegenüber erfolgt die Mengeneinstellung des Mischwassers mittels einer Kippbewegung des Schwenkhebels 3 um die Kippachse K, bei der sich die dynamische Steuerscheibe 8 in einer Linearbewegung über die statische Steuerscheibe 6 verstellt. Beispielhaft ist in den Fig. 3a und 3b der Schwenkhebel 3 seiner Drehmittelstellung sowie in seiner Geschlossenposition gezeigt, bei der zwischen den Einlässen 27, 29 und dem Mischwasserauslass 31 keine Strömungsverbindung vorherrscht. Im Gegensatz dazu ist in den Fig. 4a und 4b der Schwenkhebel um seine Kippachse K gekippt sowie um seine Drehachse D um einen Drehwinkel gedreht, wodurch sich eine Strömungsverbindung zwischen dem in der Fig. 4b gezeigten rechten Einlass 29 und dem Mischwasserauslass 31 ergibt.

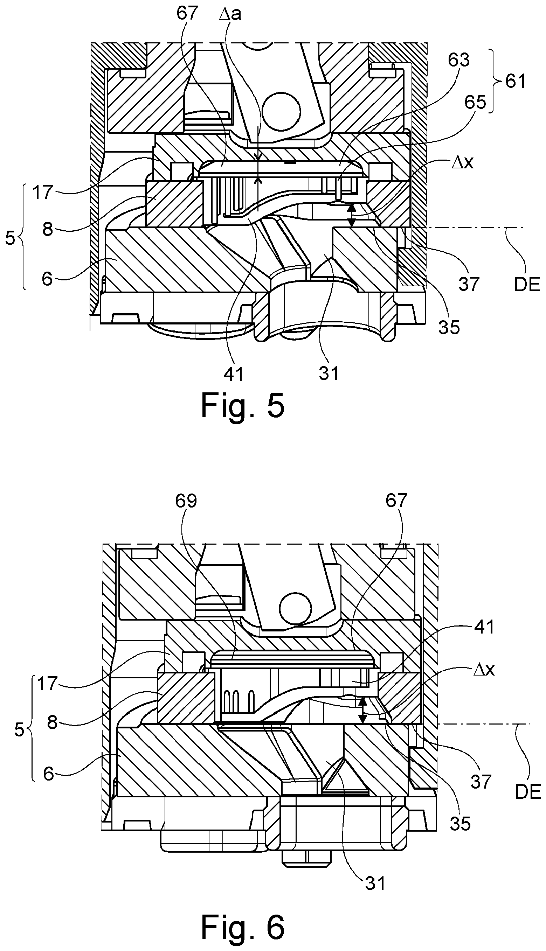

Wie aus der Fig. 3a und 4a hervorgeht, sind die beiden Steuerscheiben 6, 8 an einer Dichtungsebene DE mit einander zugewandten Dichtflächen 35, 37 (nur in den Figuren 5 und 6 gezeigt) in Gleitkontakt. In der Dichtfläche 35 der statischen Steuerscheibe 6 sind die Mündungen 39 (nur in den Figuren 3a und 4a gezeigt) der Kalt- und Warmwassereinlässe 29, 27 ausgebildet. Diese können, je nach Positionierung der dynamischen Steuerscheibe 8, von der Dichtfläche 37 der dynamischen Steuerscheibe 8 überdeckt sein bzw. freigelegt sein.

Wie aus den Figuren hervorgeht, weist die Einhebel-Kartusche ein als separates Bauteil ausgebildetes Drosselelement 41 auf, mit dem der Strömungsquerschnitt der Mündungen 39 der Kalt- und Warmwassereinlässe 29, 27 reduzierbar ist. Mittels des Drosselelementes 41 kann somit eingangsseitig in der Einhebel-Kartusche die Warm- und/oder Kaltwasserströmung in die Mischkammer 34 reduziert werden.

Das Drosselelement 41 ist in den Figuren topfförmig ausgebildet, und zwar gemäß der Figur 2 mit einem Drosselboden 43 sowie einer davon hochgezogenen umfangsseitig geschlossenen Seitenwand 45. Die Seitenwand 45 des Drosselelementes 41 ist an ihrem bodenfernen Rand mit einem davon nach außen abgewinkelten Halteflansch 47 ausgebildet, der in der Einbaulage zwischen der dynamischen Steuerscheibe 8 und der Schieberplatte 17 festgeklemmt ist. Zudem ist der Drosselboden 43 des Drosselelementes 41 aufgeteilt in ein erstes Bodensegment 51 und ein zweites Bodensegment 49. Die beiden Bodensegmente 49, 51 sind jeweils mit Drosselöffnungen 55 ausgebildet. In der Fig. 3a oder 4a ist das erste Bodensegment 51 mit seiner, der Dichtfläche 35 der statischen Steuerscheibe 6 zugewandten Bodenseite flächenbündig in der Dichtungsebene DE positioniert sowie in Gleitkontakt mit der Dichtfläche 35 der statischen Steuerscheibe 6. Demgegenüber ist das zweite Bodensegment 49 unter Bildung eines Verformungsraumes 53 um eine lichte Höhe Δx (Figuren 4a, 5 oder 6) von der Dichtungsebene DE beabstandet sowie außer Gleitkontakt mit der Dichtfläche 35 der statischen Steuerscheibe 6.

Wie oben erwähnt, sind die beiden Bodensegmente 49, 51 des Drosselbodens 43 mit den Drosselöffnungen 55 ausgebildet, während ein S-förmiger Übergangsabschnitt 53 zwischen den beiden Bodensegmenten 49, 51 sowie die umlaufende Seitenwand 45 geschlossenflächig, d.h. ohne Drosselöffnungen 55, ausgebildet sind.

In der in der Figur 3a oder 4a gezeigten Einbaulage teilt das Drosselelement 41 die Mischkammer 34 in eine obere, eingangsseitige Teilkammer 57 sowie eine untere, ausgangsseitige Teilkammer 59 auf. Bei laufender Armatur wird somit eine einlassseitige Kalt- und/oder Warmwasserströmung zunächst komplett über eine erste Drosselstelle (das heißt über die Drosselöffnungen 55 im ersten Bodensegment 51) in die erste Teilkammer 57 eingeströmt. Die erste Teilkammer 57 wird in Querrichtung durchströmt, wobei die Kalt- und/oder Warmwasserströmung an einer zweiten Drosselstelle (gebildet durch die Drosselöffnungen 55 im zweiten Bodensegment 49) in die auslassseitige zweite Teilkammer 59 ausströmt.

In der Fig. 5 ist die Einhebel-Kartusche gemäß einem zweiten Ausführungsbeispiel gezeigt, das im Wesentlichen baugleich wie die Einhebel-Kartusche der vorangegangenen Figuren ausgeführt ist. Im Unterschied zu den vorangegangenen Figuren ist in der Fig. 5 in der einlassseitigen Teilkammer 57 eine Reinigungseinheit 61 angeordnet, mit der ein Zusetzen der Drosselöffnungen 55 mit Kalk verhindert wird. Die Reinigungseinheit 61 weist eine Prallplatte 63 auf, von der Reinigungsstifte 65 abragen. Die Reinigungsstifte sind mit Lochspiel durch die Drosselöffnungen 55 geführt. Zudem ist die Prallplatte 63 lose in der ersten Teilkammer 57 angeordnet und in seiner Ruhelage (das heißt bei nicht betätigter Armatur) um einen Abstand Δa (Figur 5) von einer die erste Teilkammer 57 begrenzenden Wand 67 der Schieberplatte 17 beabstandet. Bei laufender Armatur wird die Prallplatte 63 mitsamt ihrer Reinigungsstifte 65 unter Aufbrauch des obigen Abstandes Δa in Richtung auf die Schieberplatte 17 bewegt, wodurch ein Zusetzen der Drosselöffnungen 55 mit Kalk verhindert ist.

In der Fig. 6 ist ein erfindungsgemäßes Ausführungsbeispiel der Einhebel-Kartusche gezeigt, bei der zwischen der Begrenzungswand 67 der Schieberplatte 17 und einer Oberseite des Halteflansches 47 des Drosselelementes 41 eine Druckfeder 69 abgestützt ist, mit der der Halteflansch 47 auf der dynamischen Steuerscheibe 8 fixiert ist.

### Bezugszeichenliste

- 1: Schwenkhülse
- 2: Kartuschengehäuse
- 3: Schwenkhebel
- 5: Steuerscheibenpaket
- 6: statische Steuerscheibe
- 8: dynamische Steuerscheibe
- 11: oberer Hebelarm
- 13: unterer Hebelarm
- 15: Achsanbindung
- 17: Schieberplatte
- 19: Lagerstelle
- 25: Achszapfen
- 27: Warmwassereinlass
- 29: Kaltwassereinlass
- 31: Mischwasserauslass
- 33: Ausnehmung
- 34: Mischkammer
- 35, 37: Dichtflächen
- 39: Mündungen
- 41: Drosselelement
- 43: Drosselboden
- 45: Seitenwand
- 47: Halteflansch
- 49, 51: Bodensegmente
- 53: Übergangsabschnitt
- 55: Drosselöffnungen
- 57, 59: Teilkammern
- 61: Reinigungseinheit
- 63: Prallplatte
- 65: Reinigungsstifte
- 67: Begrenzungswand
- 69: Feder
- D: Drehachse
- L: Lagerachse
- K: Kippachse
- Δa: Abstand
- Δx: lichte Höhe
- DE: Dichtungsebene

## Patentansprüche

1. Einhebel-Kartusche für eine Sanitärarmatur zur Temperatur- und/oder Mengeneinstellung von Mischwasser mit Hilfe eines Schwenkhebels (3), mit einer Steuerscheiben-Anordnung (5), die eine ortsfest in der Kartusche angeordnete statische Steuerscheibe (6) aufweist, in der ein Kalt- und ein Warmwassereinlass (29, 27) sowie ein Mischwasserauslass (31) ausgebildet sind, und eine mittels des Schwenkhebels (3) verschiebbare dynamische Steuerscheibe (8) aufweist, in der eine Ausnehmung (33) ausgebildet ist, die in unterschiedliche Überlappung mit den Kalt- und Warmwassereinlässen (29, 27) sowie dem Mischwasserauslass (31) bringbar ist, um die Temperatur und/oder Menge des aus dem Mischwasserauslass (31) der statischen Steuerscheibe (6) geführten Mischwassers einzustellen, wobei die beiden Steuerscheiben (6, 8) an einer Dichtungsebene (DE) mit einander zugewandten Dichtflächen (35, 37) in Gleitkontakt sind, und wobei in der Dichtfläche (35) der statischen Steuerscheibe (6) die Mündungen (39) der Kalt- und Warmwassereinlässe (29, 27) ausgebildet sind, die von der Dichtfläche (37) der dynamischen Steuerscheibe (8) überdeckbar sind, wobei die Kartusche ein als separates Bauteil ausgebildetes Drosselelement (41) aufweist, mit dem ein Strömungsquerschnitt der Mündungen (39) der Kalt- und Warmwassereinlässe (29, 27) reduzierbar ist zur Drosselung der Warm- und/oder Kaltwasserströmung in die Ausnehmung (33) der dynamischen Steuerscheibe (37), wobei das Drosselelement (41) topfförmig ausgebildet ist, und zwar mit einem Drosselboden (43) sowie einer davon hochgezogenen Seitenwand (45), wobei die Steuerscheiben-Anordnung (5) eine ortsfest auf der dynamischen Steuerscheibe (8) montierte Schieberplatte (17) aufweist, an der eine Lagerstelle (19) für eine Achsanbindung (15) am Schwenkhebel (3) ausgebildet ist, wobei die Seitenwand (45) des Drosselelements (41) an ihrem bodenfernen Rand in einen nach außen abgewinkelten Halteflansch (47) übergeht, wobei der Halteflansch (47) zwischen der dynamischen Steuerscheibe (8) und der Schieberplatte (17) festgelegt ist, **dadurch gekennzeichnet, dass** der Halteflansch (47) des Drosselelements (41) mittels einer Feder (69) gegen die dynamische Steuerscheibe (8) gedrückt ist.

2. Einhebel-Kartusche nach Anspruch 1, **dadurch gekennzeichnet, dass** das Drosselelement (41) einen Drosselboden (43) mit Drosselöffnungen (55) aufweist, der an seiner der Dichtfläche (35) der statischen Steuerscheibe (6) zugewandten Bodenseite flächenbündig in der Dichtungsebene (DE) liegt und/oder in Gleitkontakt mit der Dichtfläche (35) der statischen Steuerscheibe (6) ist.

3. Einhebel-Kartusche nach Anspruch 1 oder 2, **dadurch gekennzeichnet, dass** die Seitenwand (45) umfangsseitig geschlossen ausgebildet ist.

4. Einhebel-Kartusche nach einem der Ansprüche 1 bis 3, **dadurch gekennzeichnet, dass** die bevorzugt umlaufende Seitenwand (45) des Drosselelements (41) bevorzugt spaltfrei in Anlage mit einer, die Ausnehmung (33) begrenzenden Innenwand der dynamischen Steuerscheibe (8) ist, und/oder dass die Seitenwand (45) des Drosselelements (41) geschlossenflächig ist.

5. Einhebel-Kartusche nach Anspruch 2 oder nach einem der Ansprüche 3 oder 4, wenn von Anspruch 2 abhängig, **dadurch gekennzeichnet, dass** der Drosselboden (43) des Drosselelements (41) aufgeteilt ist in ein erstes Bodensegment (51) mit Drosselöffnungen (55), das an seiner der Dichtfläche (35) der statischen Steuerscheibe (6) zugewandten Bodenseite flächenbündig in der Dichtungsebene (DE) liegt und/oder in Gleitkontakt mit der Dichtfläche (35) der statischen Steuerscheibe (6) ist, und in ein zweites Bodensegment (49) mit Drosselöffnungen (55), das von der Dichtungsebene (DE) um einen Abstand (Δy) beabstandet ist, und dass insbesondere die beiden Bodensegmente (49, 51) an einem geschlossenenflächigen Übergangsabschnitt (53) ineinander übergehen.

6. Einhebel-Kartusche nach einem der Ansprüche 2 oder 5, oder nach einem der Ansprüche 3 oder 4, wenn von Anspruch 2 abhängig, **dadurch gekennzeichnet, dass** die in der dynamischen Steuerscheibe (8) ausgebildete Ausnehmung (33) zusammen mit dem Mischwasserauslass (31) in der statischen Steuerscheibe (6) eine Mischkammer (34) bildet, und dass das Drosselelement (41) die Mischkammer (34) in eine erste, einlassseitige gebildete Teilkammer (57) und in eine zweite, auslassseitige Teilkammer (59) aufteilt, wobei eine einlassseitige Kalt- und/oder Warmwasserströmung zunächst komplett die erste Teilkammer (57) durchströmt und an den Drosselöffnungen (55) des zweiten Bodensegments (49) in die zweite Teilkammer (59) ausströmt.

7. Einhebel-Kartusche nach Anspruch 6, **dadurch gekennzeichnet, dass** in der ersten Teilkammer (57) eine Reinigungseinheit (61) angeordnet ist, die ein Zusetzen der Drosselöffnungen (55) mit Kalk oder dergleichen verhindert, und dass insbesondere die Reinigungseinheit (61) eine von den Drosselöffnungen (55) beabstandete, lose in der ersten Teilkammer (57) angeordnete Prallplatte (63) aufweist, von der Reinigungsstifte (65) abragen, die mit Lochspiel durch die Drosselöffnungen (55) geführt sind, und dass durch den Fließdruck des in die erste Teilkammer (57) einströmenden Kalt- und/oder Warmwassers die Prallplatte (63) mitsamt Reinigungsstifte (65) bewegt wird und dadurch ein Zusetzen der Drosselöffnungen (55) mit Kalk, etc. verhindert wird.

## Claims

1. A single-lever cartridge for a sanitary fitting for adjusting the temperature and/or quantity of mixed water by means of a swivel lever (3), having a control disk arrangement (5) which has a stationary control disk (6) disposed in a stationary manner in the cartridge, in which control disk a cold-water inlet and a hot-water inlet (29, 27) as well as a mixed-water outlet (31) are formed and which has a dynamic control disk (8) displaceable by means of the swivel lever (3), in which dynamic control disk a recess (33) is formed which can be brought into different overlaps with the cold-water inlets and hot-water inlets (29, 27) and the mixed-water outlet (31) to adjust the temperature and/or quantity of the mixed water routed from the mixed-water outlet (31) of the stationary control disk (6), wherein the two control disks (6, 8) are in sliding contact with sealing surfaces (35, 37) facing each other at a sealing plane (DE), and wherein the mouths (39) of the cold-water inlets and hot-water inlets (29, 27) are formed in the sealing surface (35) of the stationary control disk (6), which mouths can be covered by the sealing surface (37) of the dynamic control disk (8), wherein the cartridge has a throttle element (41) designed as a separate component, which can be used to reduce a flow cross-section of the mouths (39) of the cold-water inlet and hot-water inlets (29, 27) for throttling the hot-water flow and/or cold-water flow into the recess (33) of the dynamic control disk (37), wherein the throttle element (41) is cup-shaped, having a throttle bottom (43) and a shell (45) rising therefrom, wherein the control disk arrangement (5) has a slide plate (17) mounted in a stationary manner at the dynamic control disk (8), at which slide plate a bearing position (19) is formed for an axle connection (15) at the swivel lever (3), wherein the shell (45) of the throttle element (41), at its rim remote from the bottom, merges into an outwardly angled retaining flange (47), wherein the retaining flange (47) is secured between the dynamic control disk (8) and the slide plate (17), **characterized in that** the retaining flange (47) of the throttle element (41) is pressed against the dynamic control disk (8) by means of a spring (69).

2. The single-lever cartridge according to claim 1, **characterized in that** the throttle element (41) has a throttle bottom (43) having throttle openings (55), which throttle bottom, at its bottom end facing the sealing surface (35) of the stationary control disk (6), is flush with the sealing plane (DE) and/or is in sliding contact with the sealing surface (35) of the stationary control disk (6).

3. The single-lever cartridge according to claim 1 or 2, **characterized in that** shell (45) is formed to be circumferentially closed.

4. The single-lever cartridge according to any one of claims 1 to 3, **characterized in that** the preferably circumferential shell (45) of the throttle element (41) is preferably in gap-free contact with an inner wall of the dynamic control disk (8) delimiting the recess (33), and/or **in that** the shell (45) of the throttle element (41) has a closed surface.

5. The single-lever cartridge according to claim 2, or according to any one of claims 3 or 4 if dependent on claim 2, **characterized in that** the throttle bottom (43) of the throttle element (41) is divided into a first bottom segment (51) having throttle openings (55), which, at its bottom end facing the sealing surface (35) of the stationary control disk (6), is flush with the sealing plane (DE) and/or is in sliding contact with the sealing surface (35) of the stationary control disk (6), and into a second bottom segment (49) having throttle openings (55) and being spaced apart from the sealing plane (DE) by a distance (Δy), and **in that**, in particular, the two bottom segments (49, 51) merge into one another at a closed-surface transition section (53) .

6. The single-lever cartridge according to any one of claims 2 or 5, or according to any one of claims 3 or 4 if dependent on claim 2, **characterized in that** the recess (33) formed in the dynamic control disk (8) forms a mixing chamber (34) together with the mixed-water outlet (31) in the stationary control disk (6), and **in that** the throttle element (41) divides the mixing chamber (34) into a first sub-chamber (57) formed on the inlet sided and a second sub-chamber (59) on the outlet side, wherein a cold and/or hot water flow on the inlet side initially flows completely through the first sub-chamber (57) and flows out into the second sub-chamber (59) at the throttle openings (55) of the second bottom segment (49).

7. The single-lever cartridge according to claim 6, **characterized in that** a cleaning unit (61) is disposed in the first sub-chamber (57), which cleaning unit prevents the throttle openings (55) from being clogged by limescale or the like, and **in that**, in particular, the cleaning unit (61) has a baffle plate (63) which is spaced apart from the throttle openings (55) and is disposed loosely in the first sub-chamber (57) and from which cleaning pins (65) project which are guided through the throttle openings (55) with hole clearance, and **in that** the flow pressure of the cold and/or hot water flowing into the first sub-chamber (57) moves the baffle plate (63) including the cleaning pins (65) thereby preventing clogging of the throttle openings (55) by limescale, etc..

## Revendications

1. Cartouche à levier unique pour une robinetterie sanitaire, destinée à régler la température et / ou la quantité d'eau mitigée à l'aide d'un levier pivotant (3), pourvue d'un ensemble de disques de commande (5), qui comporte un disque de commande (6) statique, placé de manière stationnaire dans la cartouche, dans lequel sont constituées une entrée (29, 27) d'eau froide et d'eau chaude, ainsi qu'une sortie (31) d'eau mitigée, et un disque de commande (8) dynamique, déplaçable au moyen du levier pivotant (3), dans lequel est conçu un évidement (33) qui est susceptible d'être amené en différent chevauchement avec les entrées (29, 27) d'eau froide et d'eau chaude, ainsi qu'avec la sortie (31) d'eau mitigée, pour régler la température et / ou la quantité de l'eau mitigée conduite hors de la sortie (31) d'eau mitigée du disque de commande (6) statique, les deux disques de commande (6, 8) étant en contact glissant sur un plan d'étanchéité (DE) avec des surfaces d'étanchéité (35, 37) qui se font face, et dans la surface d'étanchéité (35) du disque de commande (6) statique étant conçues les embouchures (39) des entrées (29, 27) d'eau froide et d'eau chaude, qui sont susceptibles d'être recouvertes par la surface d'étanchéité (37) du disque de commande (8) dynamique, la cartouche comportant un élément d'étranglement (41) conçu sous la forme d'un composant séparé, à l'aide duquel une section transversale d'écoulement des embouchures (39) des entrées (29, 27) d'eau froide et d'eau chaude peut se réduire, pour l'étranglement de l'écoulement d'eau chaude et / ou d'eau froide dans l'évidement (33) du disque de commande (37) dynamique, l'élément d'étranglement (41) étant conçu en forme de pot, à savoir avec un fond d'étranglement (43), ainsi qu'une paroi latérale (45) remontant à partir de celui-ci, l'ensemble de disques de commande (5) comportant une plaque coulissante (17) montée de manière stationnaire sur le disque de commande (8) dynamique, sur laquelle est constitué un point de logement (19) pour un raccord d'axe (15) sur le levier pivotant (3), la paroi latérale (45) de l'élément d'étranglement (41) passant par son bord éloigné du fond dans une bride de maintien (47) coudée vers l'extérieur, la bride de maintien (47) étant fixée entre le disque de commande (8) et la plaque coulissante (17), **caractérisée en ce que** la bride de maintien (47) de l'élément d'étranglement (41) est poussée au moyen d'un ressort (69) contre le disque de commande (8) dynamique.

2. Cartouche à levier unique selon la revendication 1, **caractérisée en ce que** l'élément d'étranglement (41) comporte un fond d'étranglement (43) pourvu d'orifices d'étranglement (55), qui sur son côté de fond qui fait face à la surface d'étanchéité (35) du disque de commande (6) statique se situe à fleur de surface dans le plan d'étanchéité (DE) et / ou est en contact glissant avec la surface d'étanchéité (35) du disque de commande (6) statique.

3. Cartouche à levier unique selon la revendication 1 ou 2, **caractérisée en ce que** la paroi latérale (45) est conçue en étant fermée sur sa circonférence.

4. Cartouche à levier unique selon l'une quelconque des revendications 1 à 3, **caractérisée en ce que** la paroi latérale (45) de préférence circonférentielle de l'élément d'étranglement (41) est en appui de préférence sans intervalle avec une paroi intérieure délimitant l'évidement (33) du disque de commande (8) dynamique et / ou **en ce que** la paroi latérale (45) de l'élément d'étranglement (41) est à surface pleine.

5. Cartouche à levier unique selon la revendication 2 ou selon l'une quelconque des revendications 3 ou 4, si elle dépend de la revendication 2, **caractérisée en ce que** le fond d'étranglement (43) de l'élément d'étranglement (41) est divisé en un premier segment de fond (51) pourvu d'orifices d'étranglement (55), qui sur son côté de fond qui fait face à la surface d'étanchéité (35) du disque de commande (6) statique se situe à fleur de surface dans le plan d'étanchéité (DE) et / ou est en contact glissant avec la surface d'étanchéité (35) du disque de commande (6) statique, et un deuxième segment de fond (49) pourvu d'orifices d'étranglement (55), qui est écarté du plan d'étanchéité (DE) de la valeur d'un écart (Δy) et **en ce que** notamment les deux segments de fond (49, 51) passent l'un dans l'autre dans une section de passage (53) à surface pleine.

6. Cartouche à levier unique selon l'une quelconque des revendications 2 ou 5, ou selon l'une quelconque des revendications 3 ou 4, si elle dépend de la revendication 2, **caractérisée en ce que** l'évidement (33) conçu dans le disque de commande (8) dynamique constitue conjointement avec la sortie (31) d'eau mitigée dans le disque de commande (6) dynamique une chambre de mélange (34) et **en ce que** l'élément d'étranglement (41) divise la chambre de mélange (34) en une première chambre partielle (57) constituée du côté entrée et en une deuxième chambre partielle (59) constituée du côté sortie, un écoulement d'eau froide et / ou chaude du côté entrée traversant d'abord complètement la première chambre partielle (57) et s'écoulant sur les orifices d'étranglement (55) du deuxième segment de fond (49) dans la deuxième chambre partielle (59).

7. Cartouche à levier unique selon la revendication 6, **caractérisée en ce que** dans la première chambre partielle (57) est placée une unité de nettoyage (61), qui évite un encrassement des orifices d'étranglement (55) avec du calcaire ou analogues, et **en ce que** notamment l'unité de nettoyage (61) comporte une plaque déflectrice (63) écartée des orifices d'étranglement (55), placée de manière lâche dans la première chambre partielle (57), à partir de laquelle saillissent des tiges de nettoyage (65), qui avec un jeu dans les trous sont guidées dans les orifices d'étranglement (55) et **en ce que** par la pression d'écoulement de l'eau chaude et / ou froide affluant dans la première chambre partielle (57), la plaque déflectrice (63) est déplacée avec les tiges de nettoyage (65) et de ce fait, un encrassement des orifices d'étranglement (55) avec du calcaire, etc. est évité.
